# EUROPÄISCHE PATENTSCHRIFT

(11) **EP 1 391 351 B1**
(45) Veröffentlichungstag und Bekanntmachung des Hinweises auf die Patenterteilung: **21.09.2005**
(21) Anmeldenummer: 03400027.3
(22) Anmeldetag: 16.05.2003
(51) Int. Cl.: B60R 16/02

(54) **Lenkstockmodul und Montageverfahren**
Steering column module and method of assembling thereof
Module de colonne de direction et procédé de montage

(30) Priorität: 07.08.2002 DE 10236144
(43) Veröffentlichungstag der Anmeldung: 25.02.2004
(73) Patentinhaber: Valeo Schalter und Sensoren GmbH, 74321 Bietigheim-Bissingen (DE)
(72) Erfinder: Grüner, Roland, 71732 Tamm (DE); Bosch, Jürgen, 86609 Donauwörth (DE)
(74) Vertreter: Dreiss, Fuhlendorf, Steimle & Becker

(56) Entgegenhaltungen:
- EP-A- 0 947 389
- EP-A- 1 069 026
- EP-A- 1 260 424
- DE-A- 19 723 430
- DE-A- 19 842 225

## Beschreibung

Die Erfindung betrifft ein Lenkstockmodul für ein Fahrzeug gemäß dem Oberbegriff des Anspruchs 1.

Die Erfindung betrifft außerdem ein Verfahren zur Montage eines derartigen Lenkstockmoduls.

Lenkwinkelsensoren umfassen in der Regel ein mit der Drehbewegung des Lenkrades bzw. der Lenksäule gekoppeltes Codierelement und eine der Drehbewegung nicht folgende, ortsfest angeordnete Abtasteinheit, die die jeweilige Winkelstellung des Codierelements erfasst. Das der Drehbewegung folgende Codierelement ist hierbei in einem Sensorgehäuse gelagert. Lenkwinkelsensoren dienen zur Bestimmung der jeweiligen Lenkradstellung, aufgrund derer auf die Einschlagwinkel der lenkbaren Räder des Fahrzeuges geschlossen wird. Der Lenkwinkel ist für eine Vielzahl von Fahrzeugsystemen erforderlich, beispielsweise für Brems-, Stabilisierungs-, Navigations-, Kollisionvermeidungs- und/oder automatische Lenksysteme.

Im Bereich des Lenkrades bzw. der Lenkstocks sind bei modernen Fahrzeugen eine Vielzahl von Einrichtungen angeordnet. Beispielsweise sind neben Lenkwinkelsensoren und Lenkstockschaltern auch Wickelbänder, auch als Wickelfedern oder als Kontaktspiralen bezeichnet, spiralförmig um die Lenkachse bzw. Lenksäule des Fahrzeuges angeordnet. Das eine Ende eines solchen Wickelbandes ist über einen Rotor an dem drehbaren Lenkrad bzw. an der Lenksäule und das andere Ende ist ortsfest an beispielsweise einem Gehäuse angeordnet. Ein solches Wickelband dient dazu, am Lenkrad vorhandene Schalter, Sensoren oder sonstige elektrische oder elektronische Bauteile, die mit dem Lenkrad drehfest verbunden sind, mittels elektrischer Leitungen mit anderen elektrischen oder elektronischen Bauteilen zu verbinden, die nicht der Drehbewegung des Lenkrades folgen. Dazu weist ein Wickelband in der Regel eine Vielzahl von nebeneinander liegenden, gegenseitig isolierten Leiterbahnen auf. Bei der Drehung des Lenkrades wird die spiralförmig angeordnete Wickelfeder je nach Drehrichtung aufgewickelt oder abgewickelt. Die Wickelfeder ist dabei so ausgelegt, dass sie das Lenkverhalten des Lenkrades nicht beeinträchtigt. Im Lenkstockbereich eines Fahrzeuges herrschen grundsätzlich sehr beengte Platzverhältnisse.

Aus dem Stand der Technik sind Lenkwinkelsensoren bekannt, bei denen die Codescheibe eine metallische Grundscheibe und ein die Grundscheibe umspritztes Mitnehmerteil aufweisen. Dazu wird beispielsweise die Grundscheibe zunächst zur Realisierung des Codes bearbeitet. Dies kann beispielsweise durch Stanzen oder Schneiden passieren. In einem nächsten Arbeitsschritt werden dann Abschnitte der Grundscheibe mit Kunststoff umspritzt, damit sie sicher und positionsgenau verbaut werden kann. Das Umspritzend der Codescheibe ist kostenintensiv, da ein entsprechendes Formwerkzeug zur Verfügung gestellt werden muss. Ferner hat sich gezeigt, dass nach dem Umspritzen der Grundscheibe diese sich häufig verzieht. Bei der Abtastung der Codescheibe ist allerdings von großer Bedeutung, dass die Codescheibe in einer Ebene liegt. Eine nicht exakt ebene Codescheibe kann zu falschen Abtastergebnissen und damit zu falschen erfassten Lenkwinkeln führen.

Aus der DE 197 23 460 ist ein Lenkstockmodul mit den Merkmalen des Oberbegriffs des Anspruchs 1 bekannt.

Der vorliegenden Erfindung liegt die Aufgabe zugrunde, ein Lenkstockmodul bereitzustellen, das kostengünstig in der Herstellung ist und bei dem die Abtastung der Codescheibe sicher und zuverlässig erfolgt.

Diese Aufgabe wird mit einem Lenkstockmodul mit den Merkmalen des Anspruchs 1 gelöst.

Erfindungsgemäß weist das Rotorgrundteil und/oder der Mitnehmer in Richtung des Codierelements weisende federnd nachgiebige Vorsprünge auf, die im montierten Zustand mittelbar oder unmittelbar gegen das Codierelement wirken. Eine derartige Anordnung ist auf einfache Art und Weise zu realisieren und gewährleistet, dass das Codierelement in seiner vorgegebenen Position dauerhaft exakt gehalten wird.

Ferner ist vorteilhaft, wenn zur Montage des Codierelements das Codierelement auf den Rotor aufsteckbar ist. Vorteilhafterweise erfolgt die Montage in axialer Richtung.

Weiterhin ist es vorteilhaft, wenn das Codierelement unter Vorspannung gehalten, insbesondere geklemmt gehalten ist. Aufgrund der Vorspannung kann gewährleistet werden, dass das Codierelement in seiner vorgegebenen Position gehalten wird. Die Vorspannung bzw. die federnde Nachgiebigkeit dient auch zum Höhenspielausgleich. Dadurch wird die Funktionsweise des Lenkstockmoduls bzw. des Lenkwinkelsensors verbessert und Abtastfehler verringert.

Erfindungsgemäß kann vorgesehen sein, dass das Codierelement als Codescheibe einstückig aus insbesondere einem metallischen Werkstoff, der nicht mit Kunststoff umspritzt ist, gebildet ist. Die Codescheibe besteht folglich dann lediglich aus Metall. Dies hat den Vorteil, dass das Codierelement kostengünstig und insbesondere in einem Fertigungsprozess hergestellt werden kann. Bekannte Codescheiben werden beispielsweise aus kunststoffummanteltem Metall hergestellt. Die Verwendung einer nicht kunststoffumspritzten metallischen Codescheibe hat den Vorteil, dass die Codescheibe zum einen kostengünstig in ihrer Herstellung ist; zum anderen kann gewährleistet werden, dass die Codescheibe exakt plan ausgebildet sein kann. Eine ebene Codescheibe hat ferner den Vorteil, dass kein Schleifen der Codescheibe an umliegenden Bauteilen austreten kann. Es hat sich nämlich immer wieder gezeigt, dass verzogene Codescheiben zu einem unerwünschten Berührkontakt mit die Codescheibe umgebenden Bauteilen führen können. Ein derartiger Berührkontakt führt neben einer verfälschten Erfassung des Codes zu einer unerwünschten Geräuschentwicklung,

Zur Realisierung der federnden Nachgiebigkeit kann vorgesehen sein, dass auf der dem Codierelement abgewandten Seite der Vorsprünge Materialaussparungen vorgesehen sind. Derartige Materialaussparungen lassen sich auf einfache Art und Weise realisieren. Die federnde Nachgiebigkeit kann ohne zusätzliche Bauteile realisiert werden.

Hierbei ist denkbar, dass die Vorsprünge durch die freien Enden von sich in axialer Richtung erstreckenden Stegen gebildet sind, wobei sich die jeweilige Materialaussparung nahezu über die gesamte Breite des jeweiligen Steges erstreckt. Denkbar ist, dass die Materialaussparung derart ausgebildet ist, dass rechts und links neben der Materialsaussparung Reststege des Steges verbleiben.

Um eine exakt vorgegebene Einspannung des Codierelements zu ermöglichen, kann vorgesehen sein, dass die Vorsprünge auf der dem Codierelement zugewandten Seite Drucknasen aufweisen, die insbesondere einen rechteckigen Querschnitt aufweisen.

Vorteilhafterweise kann vorgesehen sein, dass das Rotorgrundteil mit dem Mitnehmer derart gefügt ist, insbesondere verschraubt ist, dass das Codierelement und gegebenenfalls das Zwischenteil in axialer Richtung unter Vorspannung gehaltert ist. Dabei wirken vorteilhafterweise die Vorsprünge des Rotorgrundteils unmittelbar gegen das Codierelement. Der Mitnehmer wirkt unter Zwischenschaltung eines Zwischenteils gegen die andere Seite des Codierelements.

Eine weitere vorteilhafte Ausführungsform der Erfindung zeichnet sich dadurch aus, dass das Rotorgrundteil einen Innenringbund aufweist und dass der Mitnehmer sich in Richtung des Innenringbundes erstreckende Befestigungsabschnitte aufweist, die über Befestigungsmittel, insbesondere über Befestigungsschrauben, mit dem Innenringbund fest verbunden sind. Damit wird eine Verbindung des Rotorgrundteiles mit dem Mitnehmer auf einfache Art und Weise realisiert.

Um die Montage des Lenkstockmoduls zu vereinfachen, kann erfindungsgemäß ferner vorgesehen sein, dass an den Befestigungsabschnitten Zentriermittel, insbesondere Zentrierzapfen, vorgesehen sind, die zur positionsgenauen Montage des Rotorgrundteiles mit mitnehmerseitigen Zentriermitteln, insbesondere Zentrieraussparungen, zusammenwirken.

Ferner können Zentriermittel zur gegenseitigen positionsgenauen Montage an dem Mitnehmer, dem Zwischenstück und/oder dem Codierelement vorgesehen sein.

Eine Weiterbildung der Erfindung zeichnet sich dadurch aus, dass der Rotor Federelemente aufweist, die im am Fahrzeug montierten Zustand des Lenkstockmoduls dazu geeignet sind in axialer Richtung unter Vorspannung gegen einen fahrzeugseitigen Anlageabschnitt zu wirken. Das Vorsehen derartiger Federelemente hat den Vorteil, dass ein gegebenenfalls vorhandenes Axialspiel ausgeglichen wird, wodurch das Codierelement in einer vordefinierten und positionsgenauen Lage innerhalb des Gehäuses gehalten wird. Aufgrund der axialspielfreien Anordnung des Codierelements ist eine exakte Abtastung durch ein Sensorelement des Lenkwinkelsensors möglich; der Lenkwinkel lässt sich folglich sehr genau bestimmen.

Vorteilhafterweise wird der Rotor durch die Federelemente in axialer Richtung gegen einen definierten Lagerabschnitt am Grundgehäuse beaufschlagt. Der Lagerabschnitt kann hierbei beispielsweise als ein den Rotor umgebender Ring, als ein oder mehrere Ringsegmente oder als Auflagestege für den Rotor ausgebildet sein.

Dabei müssen die Federelemente nicht zwingend auf der dem Lenkrad zugewandten Seite angeordnet sein. Vielmehr ist alternativ oder kumulativ denkbar, dass die Federelemente auf der dem Lenkrad abgewandten Seite vorgesehen sind und gegen ein dort vorgesehen Anlageabschnitt wirken. Der Axialspielausgleich findet aufgrund des Vorsehens der Federelemente auch während der Drehbewegung des Lenkrades statt.

Vorteilhaft ist, wenn der Anlageabschnitt ebenfalls der Drehbewegung des Lenkrades folgt. Es gibt dann keine Relativbewegung zwischen dem Rotor und dem Lenkrad bzw. dem Anlageabschnitt. Dadurch können keine Geräusche zwischen dem Rotor und dem Lenkrad bzw. dem Anlageabschnitt auftreten. Ein derartiges Lenkstockmodul führt zu einem sehr geräuscharmen Betrieb.

Dabei ist vorteilhaft, wenn die Federelemente als Federzungen ausgebildet sind, die sich insbesondere in Draufsicht (Blickrichtung entlang der Längsachse) in radialer Richtung erstrecken und in Seitenansicht (Blickrichtung orthogonal zur Längsachse) insbesondere unter einem Winkel von 5° bis 85° senkrecht zur Längsachse angeordnet sind. Im eingebauten Zustand des Lenkstockmoduls liegen die Federzungen an dem Lenkrad bzw. dem Anlageabschnitt an. Der Winkel beträgt dann vorteilhafterweise einen Wert von größer 0°.

Ferner ist vorteilhaft, wenn der Rotor aus Kunststoff geformt ist und wenn die Federelemente an den Rotor angeformt sind. Der Rotor mit den Federelementen kann hierbei in einem Herstellungsprozess, beispielsweise durch Spritzgießen, gefertigt werden.

Ein vorteilhaftes Lenkstockmodul ergibt sich dann, wenn insgesamt drei oder mehr, insbesondere äquidistant zueinander angeordnete, Federelemente vorgesehen sind. Hierdurch wird erreicht, dass der Rotor gleichmäßig in axialer Richtung vorgespannt ist. Einem Verkanten des Rotors wird damit entgegengewirkt.

Eine vorteilhafte Ausführungsform der Erfindung sieht vor, dass das Grundgehäuse einen Wickelbandabschnitt und einen Sensorabschnitt für einen Lenkwinkelsensor aufweist, wobei der Rotor den Wickelbandabschnitt durchgreift und am Sensorabschnitt drehbar gelagert ist. Besonderer Vorteil ist dann, dass für zum einen den Rotor und zum anderen das Codierelement des Lenkwinkelsensors lediglich eine Lagerstelle bereitgestellt werden muss. Beim bekannten Stand der Technik ist eine Lagerstelle für den Rotor des Wickelbandes und eine zweite Lagerstelle für das Codierelement des Lenkwinkelsensors vorgesehen. Erfindungsgemäß werden folglich die Lagerstellen auf eine gemeinsame Lagerstelle reduziert. Hierdurch wird ein sehr kompakt bauendes Lenkstockmodul realisiert. Bauraum im Bereich des Lenkstockes eines Fahrzeuges wird folglich eingespart.

Ein weiterer Vorteil hiervon ist, dass durch Wegfall einer Lagerstelle eine Geräuschminimierung erzielt wird. Beim bekannten Stand der Technik können, ausgehend von beiden Lagerstellen, der Lagerstelle des Rotors des Wickelbandes und der Lagerstelle des Codierelements, Geräusche ausgehen. Aufgrund des Vorsehens von lediglich einer Lagerstelle können Geräusche nur von dieser Lagerstelle ausgehen.

Ferner wird eine Bauteilreduzierung erreicht. Insbesondere Lagerbauteile sind mit einer hohen Genauigkeit zu fertigen. Durch Reduzierung auf lediglich eine Lagerstelle können Bauteile, und damit Fertigungskosten, eingespart werden.

Ferner ist vorteilhaft, dass die Funktion des Lenkstockmoduls vereinfacht und verbessert wird. Durch die direkte Verbindung des Rotors und des Codierelements sind Toleranzketten kleiner und Montagegenauigkeit größer. Hierdurch wird die Signalgenauigkeit des Lenkwinkelsensors gesteigert.

Da zwischen dem Wickelband und dem Lenkwinkelsensor aufgrund der gleichen Lagerstelle kein Achsversatz entstehen kann, entfällt gegebenenfalls ein Zwischenstück bzw. ein Ausgleichsteil zwischen dem Rotor des Wickelbandes und dem Codierelement des Lenkwinkelsensors. Die Drehbewegung des Rotors wird hier ohne Spiel und ohne Versatz auf den Lenkwinkelsensor bzw. das Codierelement des Lenkwinkelsensors übertragen. Hierdurch wird eine Signalverbesserung erreicht, was eine Qualitätsverbesserung mit sich bringt.

Eine bevorzugte Ausführungsform der Erfindung sieht vor, dass der Rotor den Wickelbandabschnitt weitgehend berührungsfrei durchgreift und ausschließlich am Sensorabschnitt gelagert ist. Bei einer derartigen Ausführungsform der Erfindung werden die vorstehend genannten Vorteile besonders vorteilhaft erreicht.

Vorteilhafterweise ist am Rotor das Codierelement, insbesondere eine Codescheibe, des Lenkwinkelsensors drehfest angeordnet. Das Codierelement kann hierbei mittelbar, unter Zwischenschaltung von Zwischenteilen oder unmittelbar am Rotor befestigt sein.

Bei einer besonders bevorzugten Ausführungsform der Erfindung ist vorgesehen, dass der Wickelbandabschnitt und der Sensorabschnitt im unmontierten Zustand als separat voneinander handhabbare Teile ausgebildet sind. Dies hat den Vorteil, dass die einzelnen Teile als separat vormontierbare Einheiten vormontiert und gehandhabt werden können. Der Wickelabschnitt weist hierbei den Rotor mit der Wickelfeder auf. Der Sensorabschnitt umfasst den Lenkwinkelsensor samt Codierelement.

Erfindungsgemäß ist vorteilhaft, wenn der Sensorabschnitt einen zentrisch nach innen gerichteten, ringbundartigen Lagerabschnitt aufweist und wenn der Rotor einen flanschartigen Abschnitt mit einer umlaufenden Lagernut zur Aufnahme des Lagerabschnitts aufweist. Je nach Ausgestaltung der Lagernut und des Lagerabschnitts kann eine axial und/oder radial nahezu spielfreie Lagerung erreicht werden. Die Lagernut und/oder der Ringbund muss dabei nicht vollständig ausgebildet sein; erfindungsgemäß können Lagernut- bzw. Ringbundabschnitte zur Lagerung des Rotors genügen.

Zur Realisierung der Lagernut ist vorteilhaft, wenn der Rotor ein Rotorgrundteil und einen Mitnehmer umfasst, wobei die Lagernut in axialer Richtung durch einerseits das Rotorgrundteil oder ein Zwischenteil und durch andererseits den Mitnehmer oder ein Zwischenteil gebildet wird. Der Mitnehmer, der vorteilhafterweise von dem Rotorgrundteil lösbar ausgebildet ist, wird bei Montage des Lenkstockmoduls mit dem Rotorgrundteil derart verbunden, dass die Lagernut entsteht. Falls Zwischenteile zwischen dem Mitnehmer und dem Sensorabschnitt und/oder zwischen dem Rotorgrundteil und dem Sensorabschnitt vorgesehen sein sollten, sind diese vorteilhafterweise als Zwischenringe ausgebildet.

Eine besonders bevorzugte Ausführungsform der Erfindung zeichnet sich dadurch aus, dass der Wickelbandabschnitt auf der dem Sensorabschnitt abgewandten Seite eine Aufnahme für das Wickelband aufweist. Dies hat den Vorteil, dass die dem Sensorabschnitt zugewandte Seite des Wickelbandabschnitts den Sensorabschnitt samt des Lenkwinkelsensors schützend abdecken kann. Der Wickelbandabschnitt kann somit die Funktion eines Gehäusedeckels für den Sensorabschnitt übernehmen. Auf der dem Sensorabschnitt abgewandten Seite des Wickelbandabschnitts ist dann das Wickelband in einer Aufnahme angeordnet. Folglich kollidiert das Wickelband mit dem Lenkwinkelsensor nicht.

Vorteilhafterweise ist der Rotor derart ausgebildet, dass er die am Wickelbandabschnitt vorgesehene Aufnahme wenigstens weitgehend, und insbesondere vollständig, abdeckt. Damit ist das Wickelband geschützt im Wickelbandabschnitt untergebracht.

Wie bereits erwähnt ist es vorteilhaft, wenn der Sensorabschnitt auf der dem Wickelbandabschnitt zugewandten Seite den Lenkwinkelsensor aufweist. Der Wickelbandabschnitt dient dann zur Abdeckung des Lenkwinkelsensors.

Eine besonders gute Montierbarkeit des Lenkstockmoduls ergibt sich dann, wenn der Mitnehmer samt Codierelement und gegebenenfalls Zwischenteil am Sensorabschnitt vormontierbar ist.

Hierbei kann der Mitnehmer Rastmittel zur Hinterrastung des Codierelements und/oder des Zwischenteils aufweisen. Der Mitnehmer, der den Sensorabschnitt vorteilhafterweise durchgreift und das Codierelement bzw. das Zwischenteil hinterrastet, hält in einer derartigen Vormontageposition das Codierelement und das Zwischenteil an dem Sensorabschnitt.

Dabei ist vorteilhaft, wenn die Rastmittel an der Innenseite des Mitnehmers angeordnete, insbesondere sich in axialer Richtung erstreckende Rasthaken sind, die in an dem Zwischenteil vorgesehene Aussparungen eingreifen und an der dem Zwischenteil abgewandten Seite des Cordierelements das Codierelement hinterrasten.

Eine ebenfalls vorteilhafte Ausführungsform des erfindungsgemäßen Lenkstockmoduls ergibt sich dann, wenn der Rotor, und insbesondere das Rotorgrundteil, am Wickelbandabschnitt vormontierbar ist. Hierdurch kann der Wickelbandabschnitt samt Rotorgrundteil separat gehandhabt werden.

Das Vormontieren kann dabei derart erfolgen, dass der Rotor, und insbesondere das Rotorgrundteil, mit Rastmitteln, insbesondere mit Rasthaken, am Wickelbandabschnitt mit großem Spiel verrastbar ist. Das Rotorgrundteil durchgreift hierbei vorteilhafterweise den Wickelbandabschnitt.

Die eingangs genannte Aufgabe wird außerdem durch ein Verfahren gemäß Anspruch 36 zur Montage eines erfindungsgemäßen Lenkstockmoduls gelöst. Das Verfahren zeichnet sich dadurch aus, dass der Wickelbandabschnitt und der Rotor bzw. das Rotorgrundteil vormontiert werden, dass der Sensorabschnitt und das Codierelement und ggf. dem Mitnehmer vormontiert werden und dass die beiden vormontierten Einheiten zu dem erfindungsgemäßen Lenkstockmodul endmontiert werden. Aufgrund der Vormontage der einzelnen Einheiten kann das Lenkstockmodul beim Einbau in, oder kurz vor dem Einbau das Fahrzeug endmontiert werden. Die Montage erfolgt vorteilhafterweise entlang einer Richtung, insbesondere der Axialrichtung.

Weitere vorteilhafte Ausgestaltungen und Einzelheiten der Erfindung sind der nachfolgenden Beschreibung zu entnehmen, in der die Erfindung anhand der in der Zeichnung dargestellten Ausführungsbeispiele näher beschrieben und erläutert ist.

In der Zeichnung zeigen:
- Fig. 1:: einen Längsschnitt durch ein erfindungsgemäßes Lenkstockmodul in perspektivischer Ansicht;
- Fig. 2:: den Rotor mit dem Codierelement des Lenkstockmoduls gemäß Fig. 1;
- Fig. 3:: eine Explosionsdarstellung des Lenkstockmoduls gemäß Fig. 1 in Ansicht von schräg oben; und
- Fig. 4:: die der Fig. 3 entsprechende Darstellung von schräg unten.

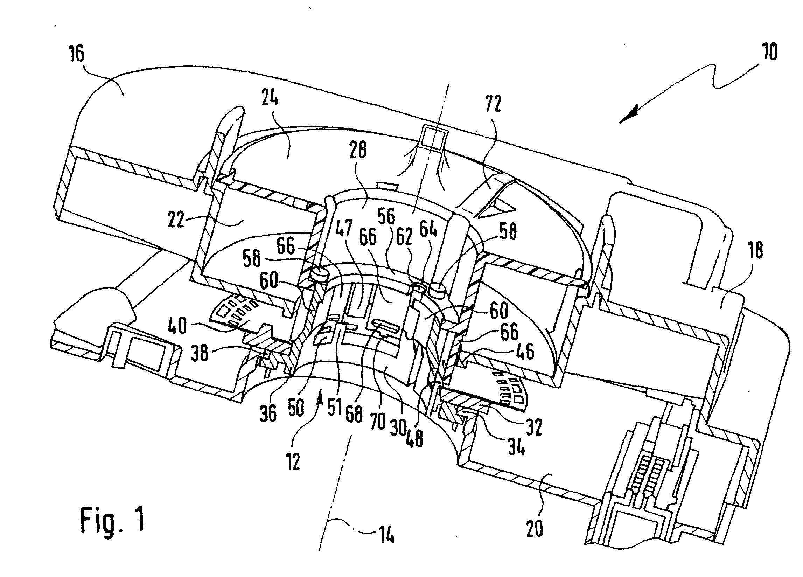

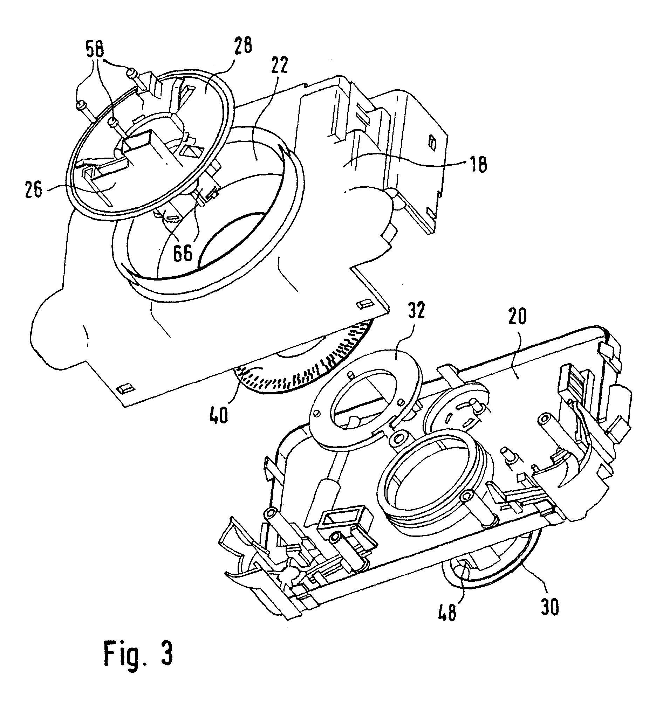

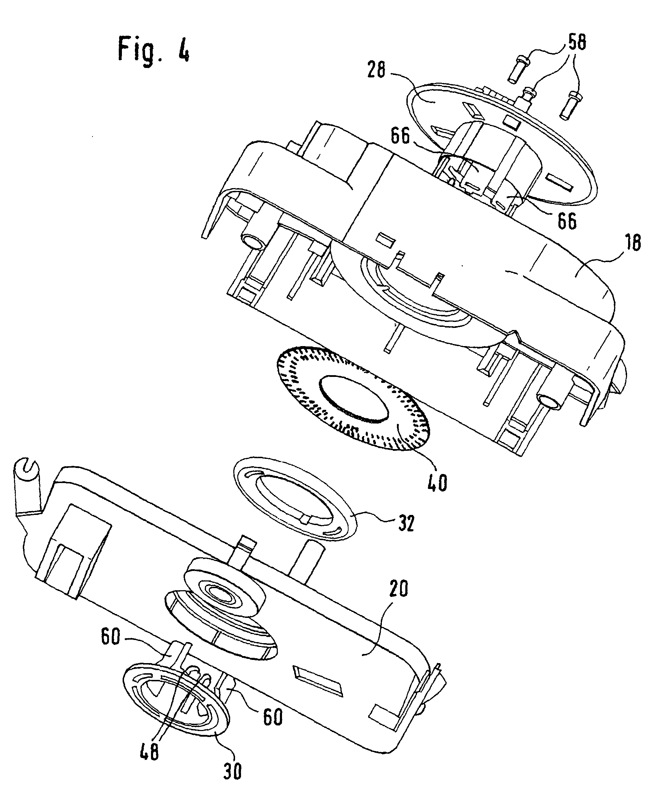

Das in der Fig. 1 gezeigte Lenkstockmodul 10 ist zur Anordnung im Bereich des Lenkstockes eines Fahrzeuges vorgesehen. Das Lenkstockmodul 10 weist einen zentralen Durchbruch 12 entlang der Achse 14 zur Aufnahme einer nicht dargestellten Lenksäule auf. Das Gehäuse 16 umfasst einen Wickelbandabschnitt 18 und einen Sensorabschnitt 20. Die beiden Gehäuseabschnitte 18 und 20 sind im unmontierten Zustand als separat voneinander handhabbare Teile ausgebildet, was aus Fig. 3 und 4 deutlich wird.

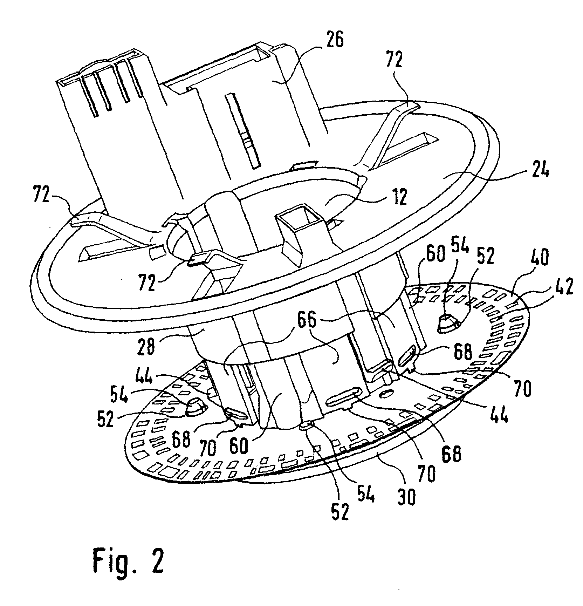

Der Wickelbandabschnitt 18 weist auf seiner dem Sensorabschnitt 20 abgewandten Seite im Bereich um den zentralen Durchbruch 12 eine Aufnahme 22 in Form einer Zylindersenkung auf. Die Aufnahme 22 dient zur Aufnahme eines um die Achse 14 spiralförmig aufgewickelten, nicht dargestellten Wickelbandes. Ein derartiges Wickelband, auch als Wickelfeder oder Kontaktspirale bezeichnet, dient zur Übertragung von elektrischen Signalen zwischen einem nicht dargestellten um die Achse 14 drehbar angeordneten Lenkrad und der Drehbewegung des Lenkrades nicht folgenden elektrischen bzw. elektronischen Bauteilen, die beispielsweise in dem Gehäuse 16 untergebracht sind. Dazu ist das eine Ende des Wickelbandes ortsfest am Gehäuse 16 bzw. am Wickelbandabschnitt 18 angeordnet. Das andere Ende des Wickelbandes ist an einem der Drehbewegung des Lenkrades folgenden Rotor 24, der am Gehäuse 16 drehbar gelagert ist, angeordnet. In der Fig. 2 ist deutlich zu erkennen, dass am Rotor 24 ein Steckerabschnitt 26 angeformt ist, der zur Aufnahme von Kontaktmitteln des nicht dargestellten Wickelbandes dient. Am Lenkrad vorhandene elektrische Bauteile können über den Steckerabschnitt 26 mit dem Wickelband kontaktiert werden.

Aus Fig. 1 wird deutlich, dass der Rotor 24 den Wickelbandabschnitt 18 berührungslos durchgreift und ausschließlich am Sensorabschnitt 20 drehbar gelagert ist. Der Rotor 24 umfasst hierbei ein die Aufnahme 22 für das Wickelband vollständig abdeckendes Rotorgrundteil 28 und einen Mitnehmer 30. Der Mitnehmer 30 ist mit einem den Mitnehmer 30 radial umgebenden Zwischenring 32 gekoppelt. Zur Lagerung des Rotors 24 sieht der Sensorabschnitt 20 Im Bereich um den zentralen Durchbruch 12 einen zentrisch nach innen gerichteten, ringbundartigen Lagerabschnitt 34 vor. Der Rotor 24, bzw. der Mitnehmer 30 des Rotors 24, weist einen flanschartigen Abschnitt 36 mit einer umlaufenden Lagernut 38 zur Aufnahme des Lagerabschnitts 34 auf. Die Lagernut 38 wird in axialer Richtung durch einerseits den Mitnehmer 36 und andererseits durch den mit dem Mitnehmer 36 gekoppelten Zwischenring 32 gebildet.

Wie aus Fig. 1 und 2 zu erkennen ist, ist mit dem Rotor 24 ein Codierelement in Form einer Codescheibe 40 drehfest gekoppelt. Die der Drehbewegung des Lenkrades folgende Codescheibe 40 ist Teil eines nicht dargestellten Lenkwinkelsensors, der im Sensorabschnitt 20 des Gehäuses 16 untergebracht ist. Die Codescheibe 40 weist zwei um die Achse 14 konzentrisch angeordnete Codespuren 42 auf, die von einer nicht dargestellten Abtasteinheit abgetastet werden. Über den jeweils abgetasteten Code lässt sich der Verdrehwinkel des Rotors 24 bzw. des Lenkrades gegenüber dem Gehäuse 16 des Lenkstockmoduls 10 bestimmen.

Das in den Figuren dargestellte Lenkstockmodul 10 hat den Vorteil, dass es lediglich eine Lagerstelle 34, 38 für zum einen das Wickelband und zum anderen die Codescheibe 40 aufweist. Hierdurch kann Bauraum eingespart werden, die Herstellkosten des Lenkstockmoduls 10 gesenkt werden, die Signalgenauigkeit verbessert werden und eine Qualitätsverbesserung, insbesondere eine Geräuschreduzierung durch eine Reduzierung der Lagerstellen, erreicht werden.

Das Lenkstockmodul 10 hat ferner den Vorteil, dass es auf einfache Art und Weise montierbar ist. Hierzu kann zum einen der Wickelbandabschnitt 18 mit dem Rotor 24 bzw. dem Rotorgrundteil 28 vormontiert werden. Andererseits kann der Sensorabschnitt 20 mit der Codescheibe 40 und dem Mitnehmer 30 samt Zwischenring 32 vormontiert werden.

Zur Vormontage des Wickelbandabschnitts 18 mit dem Rotorgrundteil 28 wird das Rotorgrundteil samt Wickelfeder axial mit dem Wickelbandabschnitt 18 versteckt. Das Rotorgrundteil 28 sieht hierfür Rastmittel in Form von Rasthaken 44 vor, die in Fig. 2 zu erkennen sind, wobei diese Rasthaken 44 mit relativ großem Spiel an der radial nach innen gerichteten Unterkante 46 der Aufnahme 22 verrasten. In der Fig. 1 ist die Rückseite 47 eines Rasthakens 44 zu erkennen. Die Rasthaken 44 sind an freien Enden sich in axialer Richtung erstreckenden, in radialer Richtung elastisch nachgiebigen Raststegen angeordnet. Durch eine Vormontage des Rotorgrundteils 28 mit dem Wickelbandabschnitt 18 ist das Wickelband in der Aufnahme 22 geschützt und verliersicher untergebracht.

Zur Vormontage des Sensorabschnitts 20 mit dem Mitnehmer 30, der Codescheibe 40 und dem Zwischenring 32 wird zunächst der Mitnehmer 30 in axialer Richtung von unten in den zentralen Durchbruch 12 des Sensorabschnitts 20 eingeführt. In einem nächsten Arbeitsschritt wird der Zwischenring 32 mit der Codescheibe 40 von oben auf den Mitnehmer 30 aufgeschoben. Der Mitnehmer 30 sieht Rastmittel in Form von Rasthaken 48 vor, die zur Hinterrastung der Codescheibe 40 mit Zwischenring 32 dienen. Die Rasthaken 48 sind an der Innenseite des Mitnehmers 30 angeordnet und greifen in an den Zwischenring 32 sowie an der Codescheibe 40 vorgesehene Aussparungen 50. Ein Rasthaken 48 ist in der Fig. 1 in der Schnittebene zu erkennen. Die Rückseite 51 eines weiteren Rasthakens zeigt ebenfalls die Fig. 1. Dadurch, dass die Rathaken 48 in Aussparungen 50 am Zwischenring 32 und an der Codescheibe 40 eingreifen, wird ein Montieren der verschiedenen Einzelteile in einer nicht vorgesehenen Position unterbunden. Um ein vorgesehenes und positionsgenaues Montieren zu gewährleisten, weist die Codescheibe 40 verschiedene Zentrierbohrungen 52 auf, in die Zentrierzapfen 54 eingreifen.

Aufgrund der Rasthaken 48 des Mitnehmers werden folglich in einer Vormontageposition die Codescheibe 40 mit dem Zwischenring 32 durch den Mitnehmer 30 an dem Sensorabschnitt 20 drehbar vormontiert.

Zur Endmontage des Lenkstockmoduls 10 wird der Wickelbandabschnitt 18 mit dem Sensorabschnitt 20 gefügt. Dabei erfolgt eine drehfeste Verbindung des Rotorgrundteils 28 mit dem Mitnehmer 30. Hierzu sieht das Rotorgrundteil 28 einen zentrisch nach innen gerichteten Innenringbund 56 vor, der über Befestigungsmittel in Form von insgesamt drei Befestigungsschrauben 58 mit an dem Mitnehmer sich in Richtung des Innenringbundes 56 erstreckenden Befestigungsabschnitten 60 verbunden ist. An wenigstens einem Befestigungsabschnitt 60 ist ein Zentriermittel 62 in Form eines Zentrierzapfens vorgesehen, der zur positionsgenauen Montage des Rotorgrundteils 28 mit einer an dem Innenringbund 56 vorgesehenen Zentrieraussparung 64 zusammenwirkt.

Beim Verschrauben des Rotorgrundteils 28 mit dem Mitnehmer 30 wird die einstückig aus einem metallischen Werkstoff gebildete Codescheibe unter Vorspannung in axialer Richtung geklemmt gehaltert. Die Codescheibe, die nicht mit Kunststoff umspritzt ist, ist flach, in einer Ebene liegend ausgebildet.

Dies hat den Vorteil, dass die Codescheibe kostengünstig herstellbar ist. Ferner kann nicht der Fall eintreten, dass die metallische Codescheibe aufgrund eines Schrumpfens oder Verziehens des Kunststoffes aus ihrer ursprünglich ebenen Lage gebracht wird. Dadurch, dass gewährleistet wird, dass die Codescheibe in einer Ebene liegt, wird die Abtastgenauigkeit der Codescheibe verbessert.

Zur Halterung der Codescheibe unter einer axialen Vorspannung ist bei dem Lenkstockmodul 10 vorgesehen, dass das Rotorgrundteil 28 sich in axialer Richtung erstreckende Stege 66 aufweist, die an ihren der Codescheibe 40 zugewandten freien Enden federnd nachgiebig ausgebildet sind. Zur Realisierung einer derartigen federnden Nachgiebigkeit weisen die Stege im Bereich ihrer freien Enden Materialaussparungen 68 auf, die sich nahezu über die gesamte Breite der Stege 66 erstrecken. Auf den der Codescheibe 40 zugewandten Stirnseiten der Stege 66 sind im Querschnitt rechteckig ausgebildete Drucknasen 70 vorgesehen.

Beim Verschrauben des Rotorgrundteils 28 mit dem Mitnehmer 30 bei der Endmontage des Lenkstockmoduls 10 werden die in axialer Richtung elastisch nachgiebigen Drucknasen 70 gegen die Codescheibe 40 beaufschlagt. Die Codescheibe 40 wird folglich unter Vorspannung zwischen den Drucknasen 70 und dem Zwischenring 32 gehalten. Aufgrund der relativ hohen Anzahl der Drucknasen 70 wird die Codescheibe 40 gleichmäßig gegen den Zwischenring 32 gedrückt, wodurch ein Höhenspielausgleich stattfindet. Beim Betrieb des Lenkstockmoduls 10 wird gewährleistet, dass die Codescheibe 40 fest und eben auf dem Zwischenring 32 aufliegt.

Aus insbesondere Fig. 2 wird deutlich, dass der Rotor 24 auf der dem Gehäuse 16 abgewandten, oberen Seite Federelemente 72 in Form von nach oben abstehenden Federzungen aufweist. Die Federzungen 72, die sich in Draufsicht in radialer Richtung erstrecken und in Seitenansicht einen Winkel von ca. 45° aufweisen, dienen im montierten Zustand des Lenkstockmoduls dazu, unter Vorspannung gegen einen lenkradseitigen bzw. der Drehbewegung des Lenkrades folgenden, in den Figuren nicht dargestellten Anlageabschnitt zu wirken. Der Rotor 24, bzw. der Zwischenring 32 des Rotors 24, wird durch die Federelemente 72 gegen den ringbundartigen Lagerabschnitt 34 beaufschlagt (Figur 1), wodurch ein axiales Lagerspiel entfernt wird. Dadurch, dass sich der lenkradseitige Anlageabschnitt synchron mit dem Rotor 24 dreht, findet keine Relativbewegung zwischen dem Anlageabschnitt und dem Rotor 24 statt, und es tritt keine störende Geräuschbildung auf. Vielmehr wird gewährleistet, dass die Codescheibe 40 auch während einer Drehbewegung des Rotors 24 in ihrer axialen, vorgegebenen Position bleibt und durch eine an der Innenseite des Sensorgehäuses 20 angeordnete, nicht dargestellte Abtasteinheit abgetastet werden kann. Dadurch wird insbesondere eine Funktionsverbesserung des Lenkwinkelsensors 10 aufgrund einer höheren Signalgenauigkeit erzielt. Der Axialspielausgleich über die Federelemente 72 führt zu keinem störenden Betriebsgeräusch. Da der Rotor 24 bzw. das Rotorgrundteil 28 mit Mitnehmer 30 den Wickelbandabschnitt 18 bei einer Drehung um die Achse 14 nicht berührt, entstehen keine Schleifgeräusche.

Vorteilhafterweise ist der Rotor 24 bzw. das Rotorgrundteil 28 als Kunststoffteil ausgebildet. Dabei ist es vorteilhaft, wenn die Federzungen 72 an den Rotor 24 bzw. das Rotorgrundteil 28 angeformt sind.

## Patentansprüche

1. Lenkstockmodul (10) für ein Fahrzeug, mit einem Grundgehäuse (16), mit einem mit der Drehbewegung eines Lenkrades des Fahrzeuges koppelbaren Rotor (24), wobei der Rotor (24) am Grundgehäuse (16) drehbar gelagert ist, wobei das Lenkstockmodul (10) einen Lenkwinkelsensor umfasst, der ein mit dem Rotor (24) drehfest gekoppeltes Codierelement (40) aufweist, wobei das Codierelement (40) als Codescheibe einstückig ausgebildet ist, der Rotor ein Rotorgrundteil (28) und einen Mitnehmer (30) aufweist, zwischen denen das Codierelement (40) unmittelbar oder mittelbar in axialer Richtung geklemmt gehaltert ist **dadurch gekennzeichnet, dass** das Rotorgrundteil (28) und/oder der Mitnehmer (30) in Richtung des Codierelements (40) weisende federnd nachgiebige Vorsprünge (66) aufweist, die im montierten Zustand mittelbar oder unmittelbar gegen das Codierelement (40) wirken.

2. Lenkstockmodul (10) nach Anspruch 1, **dadurch gekennzeichnet, dass** das Codierelement (40) flach ausgebildet ist.

3. Lenkstockmodul (10) nach Anspruch 1 oder 2, **dadurch gekennzeichnet, dass** das Codierelement (40) in axialer Richtung unter Vorspannung gehalten ist.

4. Lenkstockmodul (10) nach Anspruch 1, 2 oder 3, **dadurch gekennzeichnet, dass** das Codierelement (40) aus einem metallischen, nicht mit Kunststoff umspritzten Werkstoff gebildet ist.

5. Lenkstockmodul (10) nach einem der Ansprüche 1 bis 4, **dadurch gekennzeichnet, dass** das Rotorgrundteil (28) mit dem Mitnehmer (30) derart gefügt ist, dass das Codierelement (40) und gegebenenfalls das Zwischenteil (32) in axialer Richtung unter Vorspannung geklemmt gehaltert ist.

6. Lenkstockmodul (10) nach einem der vorhergehenden Ansprüche, **dadurch gekennzeichnet, dass** auf der dem Codierelement (40) abgewandten Seite der Vorsprünge (66) Materialaussparungen (68) zur Realisierung einer federnden nachgiebigen Vorspannung angeordnet sind.

7. Lenkstockmodul (10) nach Anspruch 6, **dadurch gekennzeichnet, dass** die Vorsprünge (66) durch die freien Enden von sich in axialer Richtung erstreckenden Stegen gebildet sind, wobei sich die jeweilige Materialaussparung (68) über die gesamte Breite des jeweiligen Stegs (66) erstreckt.

8. Lenkstockmodul (10) nach Anspruch 6 oder 7, **dadurch gekennzeichnet, dass** die Vorsprünge (66) auf der dem Codierelement (40) zugewandten Seite Drucknasen (70) aufweisen.

9. Lenkstockmodul (10) nach einem der Ansprüche 4 bis 8, **dadurch gekennzeichnet, dass** das Rotorgrundteil (28) einen Innenringbund (56) aufweist und dass der Mitnehmer (30) sich in Richtung des Innenringbundes (56) erstreckende Befestigungsabschnitte (60) aufweist, die über Befestigungsmittel mit dem Innenringbund (56) fest verbunden sind.

10. Lenkstockmodul (10) nach Anspruch 9, **dadurch gekennzeichnet, dass** an den Befestigungsabschnitten (60) Zentriermittel (62) vorgesehen sind, die zur positionsgenauen Montage des Rotorgrundteils (28) mit mitnehmerseitigen Zentriermitteln zusammenwirken.

11. Lenkstockmodul (10) nach einem der vorhergehenden Ansprüche, **dadurch gekennzeichnet, dass** zur Montage das Codierelement (40) in axialer Richtung auf den Rotor (24, 28), bzw. auf den Mitnehmer (30) des Rotors (24), aufsteckbar ist.

12. Lenkstockmodul (10) nach einem der vorhergehenden Ansprüche, **dadurch gekennzeichnet, dass** der Rotor (24), das Rotorgrundteil (28), der Mitnehmer (30), das Zwischenstück (32) und/oder das Codierelements (40) Zentriermittel (62. 64) zur gegenseitigen positionsgenauen Montage aufweisen.

13. Lenkstockmodul (10) nach einem der vorhergehenden Ansprüche, **dadurch gekennzeichnet, dass** der Rotor (24) Federelemente (72) aufweist, die im am Fahrzeug montierten Zustand des Lenkstockmoduls (10) dazu geeignet sind in axialer Richtung unter Vorspannung gegen einen fahrzeugseitigen Anlageabschnitt zu wirken.

14. Lenkstockmodul (10) nach Anspruch 13, **dadurch gekennzeichnet, dass** der Rotor (24) durch die Federelemente (72) in axialer Richtung gegen einen definierten Lagerabschnitt (34) am Grundgehäuse (16) beaufschlagt wird, wobei der Lagerabschnitt (34) als ein den Rotor (24) umgebender Ring, als ein oder mehrere Ringsegmente oder als Auflagestege ausgebildet sein kann.

15. Lenkstockmodul (10) nach Anspruch 13 oder 14, **dadurch gekennzeichnet, dass** die Federelemente (72) auf der dem Lenkrad zugewandten Seite des Rotors angeordnet sind.

16. Lenkstockmodul (10) nach Anspruch 13, 14 oder 15, **dadurch gekennzeichnet, dass** der Anlageabschnitt lenkradseitig bzw. der Drehbewegung des Lenkrades folgenden angeordnet ist.

17. Lenkstockmodul (10) nach einem der Ansprüche 13 bis 15, **dadurch gekennzeichnet, dass** der Anlageabschnitt ebenfalls der Drehbewegung des Lenkrades folgt.

18. Lenkstockmodul (10) nach einem der Ansprüche 13 bis 17, **dadurch gekennzeichnet, dass** die Federelemente (72) als Federzungen ausgebildet sind, die sich in Draufsicht in radialer Richtung erstrecken und in Seitenansicht unter einem Winkel von 5° bis 85° senkrecht zur Längsachse (14) angeordnet sind.

19. Lenkstockmodul (10) nach einem der Ansprüche 13 bis 18, **dadurch gekennzeichnet, dass** der Rotor (24) aus Kunststoff geformt ist und dass die Federelemente (72) an den Rotor (24) angeformt sind.

20. Lenkstockmodul nach einem der Ansprüche 13 bis 19, **dadurch gekennzeichnet, dass** insgesamt drei oder mehr Federelemente (72) vorgesehen sind.

21. Lenkstockmodul (10) nach einem der vorhergehenden Ansprüche, **dadurch gekennzeichnet, dass** das Grundgehäuse (16) einen Wickelbandabschnitt (18) für ein Wickelband zur Übertragung von elektrischen Signalen zwischen dem Rotor (24) und dem Grundgehäuse (16) und einen Sensorabschnitt (20) für den Lenkwinkelsensor aufweist, wobei der Rotor (24) den Wickelbandabschnitt (18) durchgreift und am Sensorabschnitt (20) drehbar gelagert ist.

22. Lenkstockmodul (10) nach Anspruch 21, **dadurch gekennzeichnet, dass** der Rotor (24) den Wickelbandabschnitt (18) berührungsfrei durchgreift und ausschließlich am Sensorabschnitt (20) gelagert ist.

23. Lenkstockmodul (10) nach Anspruch 21 oder 22, **dadurch gekennzeichnet, dass** am Rotor (24) ein Codierelement (40) des Lenkwinkelsensors drehfest angeordnet ist.

24. Lenkstockmodul (10) nach Anspruch 21, 22 oder 23, **dadurch gekennzeichnet, dass** der Wickelbandabschnitt (18) und der Sensorabschnitt (20) im unmontierten Zustand als separat voneinander handhabbare Teile ausgebildet sind.

25. Lenkstockmodul (10) nach einem der Ansprüche 12 bis 24, **dadurch gekennzeichnet, dass** am Rotor (24) oder am Rotorgrundteil (28), ein mit dem Wickelbandabschnitt (18) gekoppeltes Wickelband angeordnet ist.

26. Lenkstockmodul (10) nach einem der Ansprüche 21 bis 25, **dadurch gekennzeichnet, dass** der Sensorabschnitt (20) einen zentrisch nach innen gerichteten, ringbundartigen Lagerabschnitt (34) aufweist und dass der Rotor (24) einen flanschartigen Abschnitt mit einer Lagernut (38) zur Aufnahme des Lagerabschnitts (34) aufweist, wobei die Lagernut (38) in axialer Richtung durch einerseits das Rotorgrundteil (28) oder ein Zwischenteil (32) und durch andererseits den Mitnehmer (30) oder ein Zwischenteil gebildet wird.

27. Lenkstockmodul (10) nach Anspruch 26, **dadurch gekennzeichnet, dass** das Zwischenteil (32) bzw. die Zwischenteile als Zwischenring (32) bzw. Zwischenringe ausgebildet ist bzw. sind.

28. Lenkstockmodul (10) nach einem der Ansprüche 24 bis 27, **dadurch gekennzeichnet, dass** sich zwischen dem Rotor (24) und dem Wickelbandabschnitt (18) eine Aufnahme (22) für das Wickelband befindet.

29. Lenkstockmodul (10) nach Anspruch 28, **dadurch gekennzeichnet, dass** der Rotor (24) die am Wickelbandabschnitt (18) vorgesehene Aufnahme (22) abdeckt.

30. Lenkstockmodul (10) nach einem der Ansprüche 22 bis 30 **dadurch gekennzeichnet, dass** der Sensorabschnitt den Lenkwinkelsensor aufnimmt.

31. Lenkstockmodul (10) nach einem der Ansprüche 21 bis 30 **dadurch gekennzeichnet, dass** der Mitnehmer (30) samt Codierelement (40) und gegebenenfalls Zwischenteil am Sensorabschnitt (20) vormontierbar ist.

32. Lenkstockmodul (10) nach Anspruch 31, **dadurch gekennzeichnet, dass** der Mitnehmer Rastmittel (48) zur Hinterrastung des Codierelements (40) und/oder des Zwischenteils (32) aufweist.

33. Lenkstockamodul (10) nach Anspruch 32, **dadurch gekennzeichnet, dass** die Rastmittel (48) an der Innenseite des Mitnehmers (30) angeordneteRasthaken sind, die in an dem Zwischenteil (32) vorgesehene Aussparungen (50) eingreifen und an der dem Zwischenteil (32) abgewandten Seite des Codierelements (40) das Codierelement (40) hinterrasten.

34. Lenkstockmodul (10) nach einem der Ansprüche 21 bis 33, **dadurch gekennzeichnet, dass** der Rotor (24) oder das Rotorgrundteil (28) am Wickelbandabschnitt (18) vormontierbar ist.

35. Lenkstockmodul (10) nach Anspruch 34, **dadurch gekennzeichnet, dass** der Rotor (24) oder das Rotorgrundteil (28), mit Rastmittel (44) am Wickelbandabschnitt (18) mit großem Spiel verrastbar ist.

36. Verfahren zur Montage eines Lenkstockmoduls (10) nach einem der vorhergehenden Ansprüche, **dadurch gekennzeichnet, dass** der Wickelbandabschnitt (18) und der Rotor (24) bzw. das Rotorgrundteil (28) vormontiert werden, dass der Sensorabschnitt (20) und das Codierelement (40) und ggf. der Mitnehmer (30) vormontiert werden, dass die beiden vormontierten Einheiten zu dem Lenkstockmodul (10) endmontiert werden, und dass an dem Rotorgrundteil (28) und/oder Mitnehmer (30) in Richtung des Codierelements (40) weisende federnd nachgiebige Vorsprünge (66) angeordnet werden, die im montierten Zustand mittelbar oder unmittelbar gegen das Codierelement (40) wirken.

## Claims

1. Steering column module (10) for a vehicle, having a base housing (16) with a rotor (24) able to be coupled to the rotary movement of a steering wheel of the vehicle, whereby the rotor (24) is rotatably borne on the base housing (16), whereby the steering column module (10) includes a steering angle sensor having an encoding element (40) coupled in twistproof manner to the rotor (24), whereby the encoding element (40) is designed in one piece as an encoder disk, the rotor has a rotor base member (28) and a driver (30), between which the encoding element (40) is held clamped directly or indirectly in the axial direction, **characterised in that** the rotor base member (28) and/or the driver (30) has elastically flexible projections (66) pointing in the direction of the encoding element (40), said projections acting in the assembled condition directly or indirectly against the encoding element (40).

2. Steering column module (10) according to claim 1, **characterised in that** the encoding element (40) is designed flat.

3. Steering column module according to claim 1 or 2, **characterised in that** the encoding element (40) is held under pretension in the axial direction.

4. Steering column module (10) according to claim 1, 2 or 3, **characterised in that** the encoding element (40) is made from a metallic material not having plastics injection moulded round it.

5. Steering column module (10) according to one of the claims 1 to 4, **characterised in that** the rotor base member (28) is joined to the driver (30) in a manner such that the encoding element (40) and possibly the intermediate member (32) is held clamped under pretension in the axial direction.

6. Steering column module (10) according to one of the previous claims, **characterised in that** material cut-outs (68) are arranged on the side of the projections (66) facing away from the encoding element (40) in order to provide elastically flexible pretension.

7. Steering column module (10) according to claim 6, **characterised in that** the projections (66) are formed by the free ends of webs extending in the axial direction, whereby the respective material cut-out (68) extends almost over the whole width of the respective web (66).

8. Steering column module (10) according to claim 6 or 7, **characterised in that** the projections (66) have pressure noses (70) on the side facing towards the encoding element (40).

9. Steering column module (10) according to one of the claims 4 to 8, **characterised in that** the rotor base member (28) has an inner annular collar (56) and that the driver (30) has fixing sections (60) extending in the direction of the inner annular collar (56), said fixing sections being firmly linked via fixing means to the inner annular collar (56).

10. Steering column module (10) according to claim 9, **characterised in that** centring means (62) are provided on the fixing sections (60), said centring means cooperating with centring means on the driver side for accurately positioned assembly of the rotor base member (28).

11. Steering column module (10) according to one of the previous claims, **characterised in that** for assembly, the encoding element (40) may be pushed in the axial direction onto the rotor (24, 28) or onto the driver (30) of the rotor (24).

12. Steering column module (10) according to one of the previous claims, **characterised in that** the rotor (24), the rotor base member (28), the driver (30), the intermediate member (32) and/or the encoding element (40) have centring means (62, 64) for mutual accurately positioned assembly.

13. Steering column module (10) according to one of the previous claims, **characterised in that** the rotor (24) has spring elements (72) which in the condition of the steering column module (10) installed in the vehicle are suitable for acting under pretension in the axial direction against a projecting section on the vehicle side.

14. Steering column module (10) according to claim 13, **characterised in that** the rotor (24) is impinged upon by the spring elements (72) in the axial direction against a defined bearing section (34) on the base housing (16), whereby the bearing section (34) may be designed as a ring surrounding the rotor (24), as one or more ring segments or as support webs.

15. Steering column module (10) according to claims 13 or 14, **characterised in that** the spring elements (72) are arranged on the side of the rotor facing towards the steering wheel.

16. Steering column module (10) according to claims 13, 14 or 15, **characterised in that** the projecting section is arranged on the steering wheel side or following the rotary movement of the steering wheel.

17. Steering column module (10) according to one of the claims 13 to 15, **characterised in that** the projecting section also follows the rotary movement of the steering wheel.

18. Steering column module (10) according to one of the claims 13 to 17, **characterised in that** the spring elements (72) are designed as sprung tongues which in plan view extend in the radial direction and in side view are arranged at an angle in the range 5° to 85° perpendicular to the longitudinal axis (14).

19. Steering column module (10) according to one of the claims 13 to 18, **characterised in that** the rotor (24) is formed of plastics and that the spring elements (72) are formed on the rotor (24).

20. Steering column module according to one of the claims 13 to 19, **characterised in that** altogether three or more spring elements (72) are provided.

21. Steering column module (10) according to one of the previous claims, **characterised in that** the base housing (16) has a coiled band section (18) for a coiled band to transfer electrical signals between the rotor (24) and the base housing (16), and has a sensor section (20) for the steering angle sensor, whereby the rotor (24) penetrates the coiled band section (18) and is rotatably borne on the sensor section (20).

22. Steering column module (10) according to claim 21, **characterised in that** the rotor (24) penetrates the coiled band section (18) without contact and is borne exclusively on the sensor section (20).

23. Steering column module (10) according to claim 21 or 22, **characterised in that** an encoding element (40) of the steering angle sensor is arranged in twistproof manner on the rotor (24).

24. Steering column module (10) according to claim 21, 22 or 23, **characterised in that** the coiled band section (18) and the sensor section (20) are designed in the unmounted condition as parts able to be separately handled.

25. Steering column module (10) according to one of the claims 12 to 24, **characterised in that** a coiled band coupled to the coiled band section (18) is arranged on the rotor (24) or on the rotor base member (28).

26. Steering column module (10) according to one of the claims 21 to 25, **characterised in that** the sensor section (20) has a central inwardly directed annular collar-like bearing section (34) and that the rotor (24) has a flange-like section with a bearing groove (38) for accommodating the bearing section (34), whereby the bearing groove (38) is formed in the axial direction, on one side, by the rotor base member (28) or an intermediate member (32) and, on the other hand, by the driver (30) or an intermediate member.

27. Steering column module (10) according to claim 26, **characterised in that** the intermediate member (32) or the intermediate members is/are designed as an intermediate ring (32) or as intermediate rings.

28. Steering column module (10) according to one of the claims 24 to 27, **characterised in that** a receptacle (22) for the coiled band is situated between the rotor (24) and the coiled band section (18).

29. Steering column module (10) according to claim 28, **characterised in that** the rotor (24) covers the receptacle (22) provided on the coiled band section (18).

30. Steering column module (10) according to one of the claims 22 to 30, **characterised in that** the sensor section accommodates the steering angle sensor.

31. Steering column module (10) according to one of the claims 21 to 30, **characterised in that** the driver (30) together with the encoding element (40) and possibly the intermediate member is preassembled on the sensor section (20).

32. Steering column module (10) according to claim 31, **characterised in that** the driver has latching means (48) for latching behind the encoding element (40) and/or the intermediate member (32).

33. Steering column module (10) according to claim 32, **characterised in that** the latching means (48) are latching hooks arranged on the inside of the driver (30), which engage in recesses (50) provided on the intermediate member (32) and latch behind the encoding element (40) on the side of the encoding element (40) facing away from the intermediate member (32).

34. Steering column module (10) according to one of the claims 21 to 33, **characterised in that** the rotor (24) or the rotor base member (28) is preassembled on the coiled band section (18).

35. Steering column module (10) according to claim 34, **characterised in that** the rotor (24) or the rotor base member (28) is latchable with latching means (44) to the coiled band section (18) with a large degree of play.

36. Method for assembly of a steering column module (10) according to one of the previous claims, **characterised in that** the coiled band section (18) and the rotor (24) or the rotor base member (28) are preassembled, that the sensor section (20) and the encoding element (40) and possibly the driver (30) are preassembled, that the two preassembled units are finally assembled into the steering column module (10), and that elastically flexible projections (66) facing in the direction of the encoding element (40) are arranged on the rotor base section (28) and/or the driver (30), said projections acting in the assembled condition directly or indirectly against the encoding element (40).

## Revendications

1. Module pour colonne de direction (10) pour un véhicule automobile, comportant un boîtier de base (16), un rotor (24) pouvant être couplé au mouvement de rotation d'un volant de direction du véhicule, le rotor (24) étant monté rotatif sur le boîtier de base (16), le module pour colonne de direction (10) étant muni d'un capteur d'angle de rotation du volant qui comporte un élément codé (40) couplé solidaire en rotation avec le rotor (24), l'élément codé (40) étant conçu sous forme de disque codé monobloc, le rotor (24) comportant une pièce de base (28) et un organe d'entraînement (30) entre lesquels l'élément codé (40) est maintenu directement ou indirectement par serrage dans la direction axiale, **caractérisé en ce que** la pièce de base (28) et/ou l'organe d'entraînement (30) comportent des saillies (66) flexibles, qui sont orientées vers l'élément codé (40) et qui, à l'état monté, agissent indirectement ou directement contre l'élément codé (40).

2. Module pour colonne de direction (10) selon la revendication 1, **caractérisé en ce que** l'élément codé (40) est plat.

3. Module pour colonne de direction (10) selon la revendication 1 ou 2, **caractérisé en ce que** l'élément codé (40) est maintenu à l'état précontraint dans la direction axiale.

4. Module pour colonne de direction (10) selon la revendication 1, 2 ou 3, **caractérisé en ce que** l'élément codé (40) est réalisé dans un matériau métallique, non enveloppé de matière plastique.

5. Module pour colonne de direction (10) selon l'une quelconque des revendications 1 à 4, **caractérisé en ce que** la partie de base (28) du rotor est assemblée avec l'organe d'entraînement (30) de telle sorte que l'élément codé (40) et, le cas échéant, l'élément intermédiaire (32) sont maintenus par serrage à l'état précontraint dans la direction axiale.

6. Module pour colonne de direction (10) selon l'une quelconque des revendications précédentes, **caractérisé en ce que** sur le côté des saillies (66), détourné de l'élément codé (40), sont agencés des évidements (68) destinés à réaliser une précontrainte flexible.

7. Module pour colonne de direction (10) selon la revendication 6, **caractérisé en ce que** les saillies (66) sont formées par les extrémités libres de barrettes orientées dans le sens axial, l'évidement de matière (68) correspondant s'étendant sur toute la largeur de la barrette (66) concernée.

8. Module pour colonne de direction (10) selon la revendication 6 ou 7, **caractérisé en ce que** les saillies (66) comportent des becs de pression (70) sur le côté orienté vers l'élément codé (40).

9. Module pour colonne de direction (10) selon l'une quelconque des revendications 4 à 8, **caractérisé en ce que** la partie de base (28) du rotor comporte une collerette annulaire intérieure (56) et **en ce que** l'organe d'entraînement (30) comporte des zones de fixation (60) qui s'étendent vers la collerette annulaire intérieure (56) et qui sont assemblées fermement à la collerette annulaire intérieure (56) par l'intermédiaire de moyens de fixation.

10. Module pour colonne de direction (10) selon la revendication 9, **caractérisé en ce que** des moyens de centrage (62) sont prévus sur les zones de fixation (60), lesquels coopèrent avec des moyens de centrage du côté de l'organe d'entraînement pour le montage en position exacte de la partie de base (28) du rotor.

11. Module pour colonne de direction (10) selon l'une quelconque des revendications précédentes, **caractérisé en ce que**, en vue du montage, l'élément codé (40) peut être enfiché dans le sens axial sur le rotor (24, 28) ou sur l'organe d'entraînement (30) du rotor (24).

12. Module pour colonne de direction (10) selon l'une quelconque des revendications précédentes, **caractérisé en ce que** le rotor (24), la partie de base (28) du rotor, l'organe d'entraînement (30), la pièce intermédiaire (32) et/ou l'élément codé (40) comportent des moyens de centrage (62, 64) pour le montage réciproque en position exacte.

13. Module pour colonne de direction (10) selon l'une quelconque des revendications précédentes, **caractérisé en ce que** le rotor (24) comporte des éléments de ressort (72) qui, lorsque le module pour colonne de direction (10) est monté sur le véhicule, sont destinés à agir dans le sens axial sous précontrainte contre une zone de contact du côté du véhicule.

14. Module pour colonne de direction (10) selon la revendication 13, **caractérisé en ce que** le rotor (24) est sollicité par les éléments de ressort (72) dans le sens axial contre une zone d'appui (34) définie sur le boîtier de base (16), la zone d'appui (34) pouvant être conçue sous forme de bague entourant le rotor (24), sous forme d'un ou plusieurs segments annulaires ou sous forme de nervures d'appui.

15. Module pour colonne de direction (10) selon la revendication 13 ou 14, **caractérisé en ce que** les éléments de ressort (72) sont agencés sur la face du rotor orientée vers le volant de direction.

16. Module pour colonne de direction (10) selon la revendication 13, 14 ou 15, **caractérisé en ce que** la zone de contact est agencée du côté du volant de direction ou en suivant le mouvement de rotation du volant de direction.

17. Module pour colonne de direction (10) selon l'une quelconque des revendications 13 à 15, **caractérisé en ce que** la zone de contact suit également le mouvement de rotation du volant de direction.

18. Module pour colonne de direction (10) selon l'une quelconque des revendications 13 à 17, **caractérisé en ce que** les éléments de ressort (72) sont des languettes flexibles, qui s'étendent dans le sens radial sur une vue en élévation et qui sont disposées en formant un angle de 5° à 85° verticalement par rapport à l'axe longitudinal (14) sur une vue de profil.

19. Module pour colonne de direction (10) selon l'une quelconque des revendications 13 à 18, **caractérisé en ce que** le rotor (24) est réalisé en matière plastique et **en ce que** les éléments de ressort (72) sont formés contre le rotor (24).

20. Module pour colonne de direction (10) selon l'une quelconque des revendications 13 à 19, **caractérisé en ce qu'**il est prévu dans l'ensemble trois ou plus d'éléments de ressort (72).

21. Module pour colonne de direction (10) selon l'une quelconque des revendications précédentes, **caractérisé en ce que** le boîtier de base (16) comporte une partie (18) destinée à recevoir un ruban enroulé destiné à transmettre des signaux entre le rotor (24) et le boîtier de base (16) et une partie (20) destinée à recevoir le capteur d'angle de rotation du volant, le rotor (24) passant à travers la partie pour le ruban enroulé (18) et étant monté rotatif sur la partie pour le capteur (20).

22. Module pour colonne de direction (10) selon la revendication 21, **caractérisé en ce que** le rotor (24) passe à travers la partie pour le ruban enroulé (18) sans la toucher et est uniquement monté contre la partie pour le capteur (20).

23. Module pour colonne de direction (10) selon la revendication 21 ou 22, **caractérisé en ce qu'**un élément codé (40) du capteur d'angle de rotation du volant est agencé solidaire en rotation sur le rotor (24).

24. Module pour colonne de direction (10) selon la revendication 21, 22 ou 23, **caractérisé en ce que** la partie pour le ruban enroulé (18) et la partie pour le capteur (20) sont des pièces pouvant être manipulées séparément l'une de l'autre à l'état non monté.

25. Module pour colonne de direction (10) selon l'une quelconque des revendications 12 à 24, **caractérisé en ce qu'**un ruban enroulé, couplé à la partie pour le ruban enroulé (18), est agencé sur le rotor (24) ou sur la partie de base (28) du rotor.

26. Module pour colonne de direction (10) selon l'une quelconque des revendications 21 à 25, **caractérisé en ce que** la partie pour le capteur (20) comporte une zone d'appui (34), en forme de collerette annulaire orientée de manière centrée vers l'intérieur, et **en ce que** le rotor (24) comporte une zone de type bride avec une rainure d'appui (38) destinée à recevoir la zone d'appui (34), la rainure d'appui (38) étant formée dans le sens axial, d'une part, par la partie de base (28) du rotor ou une pièce intermédiaire (32) et, d'autre part, par l'organe d'entraînement (30) ou une pièce intermédiaire.

27. Module pour colonne de direction (10) selon la revendication 26, **caractérisé en ce que** la pièce intermédiaire (32) ou les pièces intermédiaires est ou sont réalisée(s) sous forme de bague intermédiaire (32) ou de bagues intermédiaires.

28. Module pour colonne de direction (10) selon l'une quelconque des revendications 24 à 27, **caractérisé en ce qu'**un logement (22) pour le ruban enroulé est situé entre le rotor (24) et la partie pour le ruban enroulé (18).

29. Module pour colonne de direction (10) selon la revendication 28, **caractérisé en ce que** le rotor (24) masque le logement (22) prévu sur la partie pour le ruban enroulé (18).

30. Module pour colonne de direction (10) selon l'une quelconque des revendications 22 à 30, **caractérisé en ce que** la partie pour le capteur reçoit le capteur d'angle de rotation du volant.

31. Module pour colonne de direction (10) selon l'une quelconque des revendications 21 à 30, **caractérisé en ce que** l'organe d'entraînement (30), y compris l'élément codé (40) et, le cas échéant, la pièce intermédiaire, peuvent être pré-assemblés sur la partie pour le capteur (20).

32. Module pour colonne de direction (10) selon la revendication 31, **caractérisé en ce que** l'organe d'entraînement comporte des moyens d'encliquetage (48) destinés à bloquer de derrière l'élément codé (40) et/ou la pièce intermédiaire (32).

33. Module pour colonne de direction (10) selon la revendication 32, **caractérisé en ce que** les moyens d'encliquetage (48) sont des crochets d'encliquetage qui sont agencés sur la face intérieure de l'organe d'entraînement (30) et qui entrent en prise dans des évidements (50) prévus sur la pièce intermédiaire (32) et s'enclenchent derrière l'élément codé (40) sur le côté de l'élément codé (40) détourné de la pièce intermédiaire (32).

34. Module pour colonne de direction (10) selon l'une quelconque des revendications 21 à 33, **caractérisé en ce que** le rotor (24) ou la partie de base (28) du rotor peuvent être pré-assemblés sur la partie pour le ruban enroulé (18).

35. Module pour colonne de direction (10) selon la revendication 34, **caractérisé en ce que** le rotor (24) ou la partie de base (28) du rotor peuvent être enclenchés avec un grand jeu sur la partie pour le ruban enroulé (18) par des moyens d'encliquetage.

36. Procédé de montage d'un module pour colonne de direction (10) selon l'une quelconque des revendications précédentes, **caractérisé en ce que** la partie pour le ruban enroulé (18) et le rotor (24) ou la partie de base (28) du rotor sont pré-assemblés, **en ce que** la partie pour le capteur (20) et l'élément codé (40) et, le cas échéant, l'organe d'entraînement (30) sont pré-assemblés, **en ce que** les deux unités pré-assemblées sont assemblées finalement l'une à l'autre pour former le module pour colonne de direction (10) et **en ce que** sur la partie de base (28) du rotor et/ou l'organe d'entraînement (30) sont agencées des saillies (66) flexibles, qui sont orientées vers l'élément codé (40) et qui, à l'état monté, agissent indirectement ou directement contre l'élément codé (40).
